# EUROPEAN PATENT SPECIFICATION

(11) **EP 3 725 585 B1**
(45) Date of publication and mention of the grant of the patent: **05.11.2025**
(21) Application number: 18888784.8
(22) Date of filing: 12.12.2018
(51) Int. Cl.: B60N 2/02, B60N 2/04, B60N 2/42, B60Q 9/00

(54) **METHOD AND SYSTEM FOR CONTROLLING VEHICLE SEAT**
VERFAHREN UND SYSTEM ZUR STEUERUNG EINES FAHRZEUGSITZES
PROCÉDÉ ET SYSTÈME DE COMMANDE DE SIÈGE DE VÉHICULE

(30) Priority: 15.12.2017 CN 201711353817
(43) Date of publication of application: 21.10.2020
(73) Proprietor: NIO (Anhui) Holding Co., Ltd., Hefei City, Anhui Province (CN)
(72) Inventor: GONG, Haining, Anting, Jiading, Shanghai (CN); FU, Litao, Anting, Jiading, Shanghai (CN); DONG, Yiwei, Anting, Jiading, Shanghai (CN); CHEN, Wanjing, Anting, Jiading, Shanghai (CN); LI, Tianshu, Anting, Jiading, Shanghai (CN)
(74) Representative: Vossius & Partner Patentanwälte Rechtsanwälte mbB
(86) International application number: PCT/CN2018/120434
(87) International publication number: WO 2019/114720

(56) References cited:
- CN-A- 104 340 086
- CN-A- 105 438 025
- CN-A- 106 394 320
- CN-A- 107 199 917
- CN-A- 108 454 467
- JP-A- 2008 284 949
- JP-A- 2008 284 949
- US-A- 5 529 372
- US-A1- 2016 221 475

## Description

### Technical Field

The invention relates to the technical field of vehicles, and in particular to a method and system for controlling a vehicle seat.

### Background Art

With the continuous improvement of people's living standards, vehicles have gradually become an indispensable part of people's daily life. Moreover, with the rapid development of the vehicle industry, users begin to place higher and higher requirements for the comprehensive performance of vehicles. Specifically, the positions of the existing vehicle seats are all adjustable, and passengers can adjust the positions of the vehicle seats according to the actual use requirements during riding, so as to rationally allocate the space in the vehicle, so that the entire riding process becomes more comfortable.

Generally, to facilitate the use of passengers, the existing vehicle seats are each provided with a relatively long adjustment range. In the actual use process, safety belts and airbags of the vehicles are also provided with effective usage ranges, however, the adjustment range of the vehicle seat is not exactly the same as the safety protection range. Therefore, when the passenger moves the vehicle seat out of the safety protection range, the safety of the passenger cannot be effectively guaranteed. In addition, if the vehicle is driving at a high speed, speeding up quickly, or on a slope, it is also likely to cause serious harm to the life safety of the passenger when the passenger adjusts the vehicle seat.

Accordingly, there is a need in the art for a new method and system for controlling a vehicle seat, an application, and a computer device to solve the above problems.

### Summary of the Invention

To solve the above problems in the prior art, that is, to solve the problem that the existing vehicle seat is not subject to any restrictions during the adjustment process so that it is likely to cause harm to the life safety of the passenger, the invention provides a method for controlling a vehicle seat as defined in the appended set of claims.

The invention further provides a vehicle seat controller as defined in the appended set of claims, which is able to execute a method for controlling a vehicle seat described in any one of the above preferred technical solutions.

It can be understood by those skilled in the art that, in the preferred technical solutions of the invention, the method for controlling a vehicle seat of the invention comprises: acquiring a state of the vehicle seat such that the vehicle seat controller can effectively acquire the operating state of the vehicle and the current state of the vehicle seat; and then selectively adjusting the position of the vehicle seat according to the state of the vehicle seat. Since a safety system of the vehicle can effectively protect the safety of a passenger only when the vehicle seat is adjusted within a protection range of the safety system of the vehicle, the vehicle seat controller must ensure that the vehicle seat can be adjusted only within the protection range of the safety system. Moreover, if the operating state of the vehicle is likely to cause the vehicle seat to lose control during the adjustment process, the vehicle seat controller cannot adjust the position of the vehicle seat, such that the vehicle seat controller of the invention is convenient for a user to use, and can also effectively guarantee the safety of the passenger.

### Brief Description of the Drawings

Fig. 1 is a flowchart of the main steps of a method for controlling a vehicle seat of the invention;
Fig. 2 is a flowchart of steps of a first preferred embodiment of the method for controlling a vehicle seat of the invention;
Fig. 3 is a flowchart of steps of a second preferred embodiment of the method for controlling a vehicle seat of the invention;
Fig. 4 is a flowchart of steps of a third preferred embodiment of the method for controlling a vehicle seat of the invention;
Fig. 5 is a flowchart of steps of a fourth preferred embodiment of the method for controlling a vehicle seat of the invention; and
Fig. 6 is a flowchart of steps of a fifth preferred embodiment of the method for controlling a vehicle seat of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although each step of the method of the invention is described in a specific order in this application, these orders are not to be regarded in a restrictive sense. Without departing from the basic principles of the invention, those skilled in the art may perform the steps in different orders.

Based on the content proposed in the section Background Art, the existing vehicle seat is not subject to any restrictions during the adjustment process so that it is likely to cause harm to the life safety of the passenger. To solve the above problems in the prior art, the invention provides a method and system for controlling a vehicle seat. The control method comprises: acquiring a state of the vehicle seat, and selectively adjusting the position of the vehicle seat according to the state of the vehicle seat, such that the control method is convenient for a user to use, and can also effectively guarantee the safety of a passenger.

The vehicle seat controller of the invention can acquire an operation instruction from a control terminal, and the vehicle seat controller can also control the vehicle seat to adjust the position thereof. At the same time, the vehicle seat controller can also acquire the current position of the vehicle seat, and a speed, an acceleration and an inclination degree of the vehicle. It can be understood that the speed, the acceleration and the inclination degree of the vehicle are exactly the speed, the acceleration and the inclination degree of the vehicle seat. In other words, the vehicle seat controller only needs to acquire the speed, the acceleration and the inclination degree of the vehicle to obtain the speed, the acceleration and the inclination degree of the vehicle seat. Preferably, the vehicle seat controller can selectively adjust the position of the vehicle seat by combining the current position of the vehicle seat with the speed, the acceleration and the inclination degree of the vehicle, and thus can also effectively ensure the safety of the passenger while facilitating the operation of the passenger. In addition, it should be noted that the invention does not limit the way in which the vehicle seat controller acquires the state of the vehicle seat, as long as the vehicle seat controller can acquire the state of the vehicle seat.

It can be understood by those skilled in the art that the vehicle seat controller may be a control module in a vehicle-mounted ECU (vehicle electronic control unit), or may be a separately provided vehicle seat controller, as long as the vehicle seat controller can execute the method for controlling a vehicle seat of the invention. Preferably, the user may send an operation instruction to the vehicle seat controller by the control terminal. At the same time, the vehicle seat controller can also generate an instruction by itself to adjust the vehicle seat. It should be noted that the control terminal may be a mobile terminal and/or a vehicle HMI (vehicle human-machine interaction system). Preferably, the mobile terminal may be a mobile phone, a tablet, a notebook computer, etc. Of course, the control terminal may also be another device capable of sending an operation instruction to the vehicle seat controller.

Further, the invention further sets forth an application for a control terminal. Taking the control terminal used by the user being a mobile phone as an example, the user can install the application in the mobile phone and then input a position adjustment instruction through the application. Then, the mobile phone can send the position adjustment instruction input by the user to the vehicle seat controller, and at the same time, the vehicle seat controller can receive the position adjustment instruction sent by the mobile phone and control the position of the vehicle seat according to the position adjustment instruction.

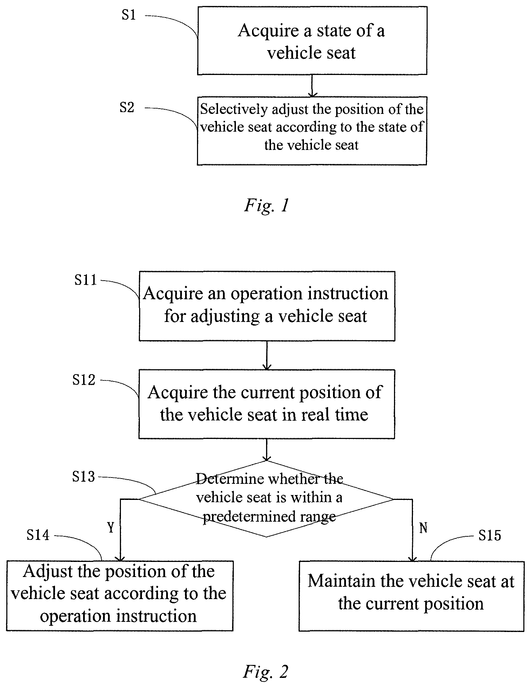

First, reference is made to Fig. 1, which is a flowchart of the main steps of a method for controlling a vehicle seat of the invention. The main steps of the control method of the invention will be briefly described below with respect to Fig. 1. As shown in Fig. 1, the control method mainly comprises the following steps:
S1: acquiring a state of the vehicle seat; and
S2: selectively adjusting the position of the vehicle seat according to the state of the vehicle seat.

After the user sends an operation instruction to the vehicle seat controller by a control terminal, the vehicle seat controller can acquire the operation instruction from the user, and acquire the state of the vehicle seat in step S1. It can be understood that the existing vehicles each have a safety system for ensuring the safety of a passenger, but the safety system has a predetermined protection range. If the position of the vehicle seat exceeds the protection range of the safety system, the safety system cannot effectively protect the safety of the passenger. Moreover, if the operating state of the vehicle is likely to cause the vehicle seat to lose control during the adjustment process, it is also likely to cause harm to the passenger when the vehicle seat controller adjusts the position of the vehicle seat. Therefore, the vehicle seat controller needs to first acquire the state of the vehicle seat in order to effectively determine whether the vehicle seat is suitable for being adjusted in the current state.

Further, in step S2, the vehicle seat controller can selectively adjust the position of the vehicle seat according to the state of the vehicle seat. Specifically, the vehicle seat controller needs to effectively determine whether the vehicle seat can be safely adjusted according to the position of the vehicle seat and the operating state of the vehicle, such that the vehicle seat controller can selectively adjust the position of the vehicle seat according to the current state of the vehicle seat, thereby greatly ensuring the safety of the passenger.

Next, reference is made to Fig. 2, which is a flowchart of steps of a first preferred embodiment of the method for controlling a vehicle seat of the invention. The following description will be given in conjunction with the case where the vehicle seat controller selectively adjusts the vehicle seat by acquiring the current position of the vehicle seat. As shown in Fig. 2, the first preferred embodiment of the control method comprise the following steps:
S11: acquiring an operation instruction for adjusting the vehicle seat;
S12: acquiring the current position of the vehicle seat in real time;
S13: determining whether the vehicle seat is within a predetermined range; if yes, proceeding to step S14; or if not, proceeding to step S15;
S14: adjusting the position of the vehicle seat according to the operation instruction; and
S15: maintaining the vehicle seat at the current position.

After the user sends an operation instruction to the vehicle seat controller by a control terminal, the vehicle seat controller can acquire the operation instruction for adjusting the vehicle seat from the user in step S11. Next, in step S12, the vehicle seat controller can acquire the current position of the vehicle seat in real time. The safety system of the vehicle has a predetermined protection range, and when the position of the vehicle seat exceeds the protection range of the safety system, the safety system cannot effectively protect the safety of the passenger. Therefore, the vehicle seat controller must first determine whether the current position of the vehicle seat is within the protection range of the safety system before selectively adjusting the position of the vehicle seat.

Further, in step S13, the vehicle seat controller can determine whether the vehicle seat is within the protection range according to the current position of the vehicle seat, so as to selectively adjust the position of the vehicle seat. Specifically, if the vehicle seat is within the predetermined range, step S14 is executed, that is, the position of the vehicle seat is adjusted according to the operation instruction from the user. When the vehicle seat is within the predetermined range, the passenger in the vehicle seat is within the protection range of the safety system of the vehicle, and it is safe to adjust the position of the vehicle seat at this time. Therefore, step S14 is executed, that is, the vehicle seat controller can adjust the position of the vehicle seat according to the operation instruction from the user, so as to maximize the convenience for the user to adjust the vehicle seat under the premise of effectively guaranteeing the safety of the passenger, so that the passenger himself/herself can allocate the space in the vehicle according to actual use requirements. If the vehicle seat has exceeded the predetermined range, step S15 is executed, that is, the vehicle seat is maintained at the current position. Since when the vehicle seat exceeds the predetermined range, the safety system of the vehicle cannot protect the passenger in the vehicle seat, at this time, step S15 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat is already at the boundary of the protection range, so as to further improve the user experience.

It can be understood by those skilled in the art that the vehicle seat controller can acquire the current position of the vehicle seat in real time, so as to effectively ensure that the vehicle seat is adjusted within the predetermined range at all times. Generally, when the vehicle seat is adjusted to the boundary of the predetermined range, the vehicle seat controller immediately controls the vehicle seat to maintain same at the boundary position. In this case, the vehicle seat only can be adjusted towards the predetermined range, so as to effectively ensure that the vehicle seat can be kept within the predetermined range at all times, thereby effectively ensuring that the passenger can be within the protection range of the safety system at all times.

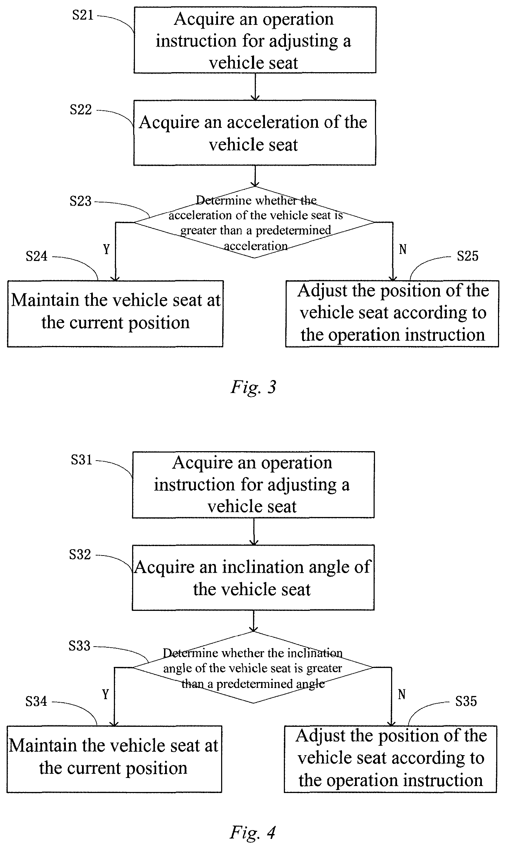

Next, reference is made to Fig. 3, which is a flowchart of steps of a second preferred embodiment of the method for controlling a vehicle seat of the invention. The following description will be given in conjunction with the case where the vehicle seat controller selectively adjusts the vehicle seat by acquiring an acceleration of the vehicle seat. As shown in Fig. 3, the second preferred embodiment of the control method comprise the following steps:
S21: acquiring an operation instruction for adjusting the vehicle seat;
S22: acquiring an acceleration of the vehicle seat;
S23: determining whether the acceleration of the vehicle seat is greater than a predetermined acceleration; if yes, proceeding to step S24; or if not, proceeding to step S25;
S24: maintaining the vehicle seat at the current position; and
S25: adjusting the position of the vehicle seat according to the operation instruction.

After the user sends an operation instruction to the vehicle seat controller by a control terminal, the vehicle seat controller can acquire the operation instruction for adjusting the vehicle seat from the user in step S21. Next, in step S22, the vehicle seat controller can acquire the acceleration of the vehicle, that is, the acceleration of the vehicle seat. It can be understood that when the vehicle is in a situation of rapid acceleration or rapid deceleration, the vehicle seat is likely to get out of control during the adjustment process and cause harm to the passenger. Therefore, in this case, adjusting the position of the vehicle seat is a very dangerous operation. In other words, the vehicle seat controller must first determine whether the acceleration of the vehicle seat has exceeded the predetermined acceleration before selectively adjusting the position of the vehicle seat, so as to effectively guarantee the safety of the passenger.

Further, in step S23, the vehicle seat controller can determine whether the acceleration of the vehicle seat exceeds the predetermined acceleration, so as to selectively adjust the position of the vehicle seat. Specifically, if the acceleration of the vehicle seat is greater than the predetermined acceleration, step S24 is executed, that is, the vehicle seat is maintained at the current position. It can be understood that when the acceleration of the vehicle seat is greater than the predetermined acceleration, the vehicle seat is likely to get out of control during the adjustment process, thereby causing harm to the passenger. At this time, step S24 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the acceleration of the vehicle has exceeded the predetermined acceleration, so as to further improve the user experience. Moreover, if the acceleration of the vehicle seat is less than or equal to the predetermined acceleration, step S25 is executed, that is, the position of the vehicle seat is adjusted according to the operation instruction from the user. When the acceleration of the vehicle seat is less than or equal to the predetermined acceleration, adjusting the position of the vehicle seat does not pose a threat to the life safety of the passenger in the vehicle seat, that is, it is safe to adjust the position of the vehicle seat at this time. Therefore, step S25 is executed, that is, the vehicle seat controller can adjust the position of the vehicle seat according to the operation instruction from the user, so as to maximize the convenience for the user to adjust the vehicle seat under the premise of effectively guaranteeing the safety of the passenger, so that the passenger himself/herself can allocate the space in the vehicle according to actual use requirements.

Next, reference is made to Fig. 4, which is a flowchart of steps of a third preferred embodiment of the method for controlling a vehicle seat of the invention. The following description will be given in conjunction with the case where the vehicle seat controller selectively adjusts the vehicle seat by acquiring an inclination angle of the vehicle seat. As shown in Fig. 4, the third preferred embodiment of the control method comprise the following steps:
S31: acquiring an operation instruction for adjusting the vehicle seat;
S32: acquiring an inclination angle of the vehicle seat;
S33: determining whether the inclination angle of the vehicle seat is greater than a predetermined angle; if yes, proceeding to step S34; or if not, proceeding to step S35;
S34: maintaining the vehicle seat at the current position; and
S35: adjusting the position of the vehicle seat according to the operation instruction.

After the user sends an operation instruction to the vehicle seat controller by a control terminal, the vehicle seat controller can acquire the operation instruction for adjusting the vehicle seat from the user in step S31. Next, in step S32, the vehicle seat controller can acquire the inclination angle of the vehicle, that is, the inclination angle of the vehicle seat. It can be understood that when the vehicle is on an uphill or downhill slope, especially when the slope gradient thereof is large, the vehicle seat is likely to get out of control during the adjustment process and cause harm to the passenger. Therefore, in this case, adjusting the position of the vehicle seat is a very dangerous operation. In other words, the vehicle seat controller must first determine whether the inclination angle of the vehicle seat has exceeded the predetermined angle before selectively adjusting the position of the vehicle seat, so as to effectively guarantee the safety of the passenger.

Further, in step S33, the vehicle seat controller can determine whether the inclination angle of the vehicle seat exceeds the predetermined angle, so as to selectively adjust the position of the vehicle seat. Specifically, if the inclination angle of the vehicle seat is greater than the predetermined angle, step S34 is executed, that is, the vehicle seat is maintained at the current position. It can be understood that, when the inclination angle of the vehicle seat is greater than the predetermined angle, it means that the vehicle is going up or down a steep slope. In this case, the adjustment of the vehicle seat is likely to cause the vehicle seat to get out of control during the adjustment process, thereby causing harm to the passenger. Therefore, step S34 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the vehicle is going up or down a steep slope, so as to further improve the user experience. Moreover, if the inclination angle of the vehicle seat is less than or equal to the predetermined angle, step S35 is executed, that is, the position of the vehicle seat is adjusted according to the operation instruction from the user. When the inclination angle of the vehicle seat is less than or equal to the predetermined angle, adjusting the position of the vehicle seat does not pose a threat to the life safety of the passenger in the vehicle seat, that is, it is safe to adjust the position of the vehicle seat at this time. Therefore, step S35 is executed, that is, the vehicle seat controller can adjust the position of the vehicle seat according to the operation instruction from the user, so as to maximize the convenience for the user to adjust the vehicle seat under the premise of effectively guaranteeing the safety of the passenger, so that the passenger himself/herself can allocate the space in the vehicle according to actual use requirements.

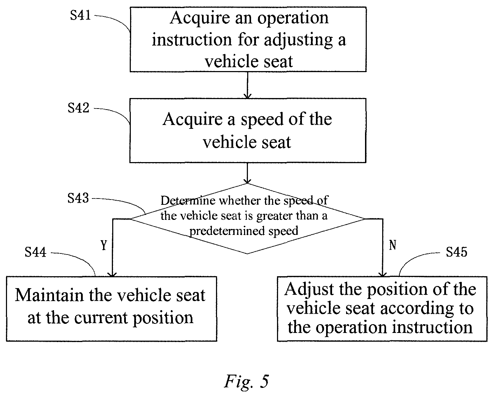

Next, reference is made to Fig. 5, which is a flowchart of steps of a fourth preferred embodiment of the method for controlling a vehicle seat of the invention. The following description will be given in conjunction with the case where the vehicle seat controller selectively adjusts the vehicle seat by acquiring a speed of the vehicle seat. As shown in Fig. 5, the fourth preferred embodiment of the control method comprise the following steps:
S41: acquiring an operation instruction for adjusting the vehicle seat;
S42: acquiring a speed of the vehicle seat;
S43: determining whether the speed of the vehicle seat is greater than a predetermined speed; if yes, proceeding to step S44; or if not, proceeding to step S45;
S44: maintaining the vehicle seat at the current position; and
S45: adjusting the position of the vehicle seat according to the operation instruction.

After the user sends an operation instruction to the vehicle seat controller by a control terminal, the vehicle seat controller can acquire the operation instruction for adjusting the vehicle seat from the user in step S41. Next, in step S42, the vehicle seat controller can acquire the speed of the vehicle, that is, the speed of the vehicle seat. It can be understood that when the vehicle is running at a high speed, the vehicle seat is likely to be affected by the running state of the vehicle and gets out of control during the adjustment process, thereby causing harm to the passenger. Therefore, in this case, adjusting the position of the vehicle seat is also a very dangerous operation. In other words, the vehicle seat controller must first determine whether the speed of the vehicle seat has exceeded the predetermined speed before selectively adjusting the position of the vehicle seat, so as to effectively guarantee the safety of the passenger.

Further, in step S43, the vehicle seat controller can determine whether the speed of the vehicle seat exceeds the predetermined speed, so as to selectively adjust the position of the vehicle seat. Specifically, if the speed of the vehicle seat is greater than the predetermined speed, step S44 is executed, that is, the vehicle seat is maintained at the current position. It can be understood that when the speed of the vehicle seat is greater than the predetermined speed, the vehicle seat is likely to get out of control during the adjustment process, thereby causing harm to the passenger. At this time, step S44 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the vehicle has overspeeded, so as to further improve the user experience. If the speed of the vehicle seat is less than or equal to the predetermined speed, step S45 is executed, that is, the position of the vehicle seat is adjusted according to the operation instruction from the user. When the speed of the vehicle seat is less than or equal to the predetermined speed, adjusting the position of the vehicle seat does not pose a threat to the life safety of the passenger in the vehicle seat. In other words, it is safe to adjust the position of the vehicle seat at this time. Therefore, step S45 is executed, that is, the vehicle seat controller can adjust the position of the vehicle seat according to the operation instruction from the user, so as to maximize the convenience for the user to adjust the vehicle seat under the premise of effectively guaranteeing the safety of the passenger, so that the passenger himself/herself can allocate the space in the vehicle according to actual use requirements.

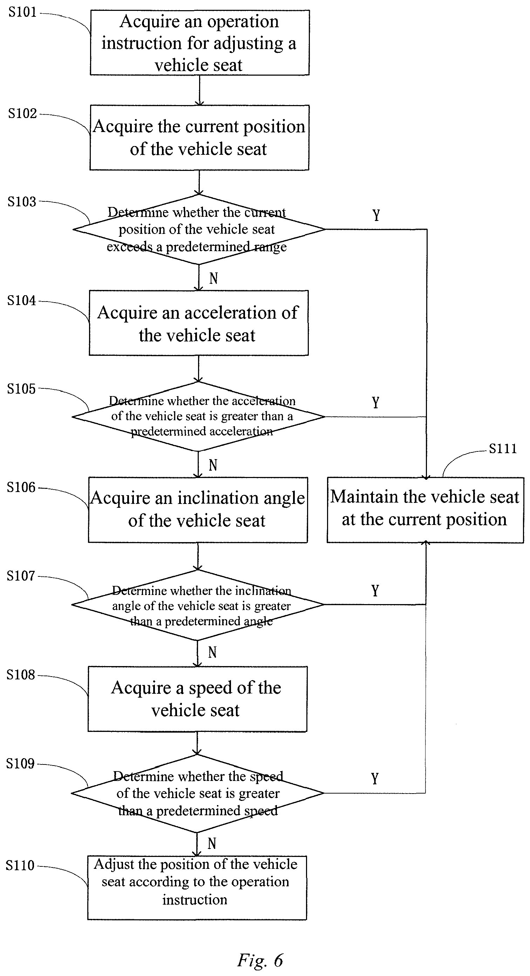

Next, reference is made to Fig. 6, which is a flowchart of steps of a fifth preferred embodiment of the method for controlling a vehicle seat of the invention. The following description will be given in conjunction with the case where the vehicle seat controller selectively adjusts the vehicle seat by acquiring multiple states of the vehicle seat. As shown in Fig. 6, the fifth preferred embodiment of the control method comprise the following steps:
S101: acquiring an operation instruction for adjusting the vehicle seat;
S102: acquiring the current position of the vehicle seat;
S103: determining whether the current position of the vehicle seat exceeds a predetermined range; if not, proceeding to step S104; if yes, proceeding to step S111; or
S104: acquiring an acceleration of the vehicle seat;
S105: determining whether the acceleration of the vehicle seat is greater than a predetermined acceleration; if not, proceeding to step S106; if yes, proceeding to step S111; or
S106: acquiring an inclination angle of the vehicle seat;
S107: determining whether the inclination angle of the vehicle seat is greater than a predetermined angle; if not, proceeding to step S108; if yes, proceeding to step S111; or
S108: acquiring a speed of the vehicle seat;
S109: determining whether the speed of the vehicle seat is greater than a predetermined speed; if not, proceeding to step S110; if yes, proceeding to step S111; or
S110: adjusting the position of the vehicle seat according to the operation instruction; and
S111: maintaining the vehicle seat at the current position.

Further, After the user sends an operation instruction to the vehicle seat controller by a control terminal, the vehicle seat controller can acquire the operation instruction for adjusting the vehicle seat from the user in step S101. Next, in step S102, the vehicle seat controller can acquire the current position of the vehicle seat in real time, such that the vehicle seat controller can selectively adjust the position of the vehicle seat according to the current position of the vehicle seat. It can be understood that, the safety system of the vehicle has a predetermined protection range, and when the position of the vehicle seat exceeds the protection range of the safety system, the safety system cannot effectively protect the safety of the passenger. Therefore, in step S103, the vehicle seat controller needs to determine whether the vehicle seat is within the protection range of the safety system according to the current position of the vehicle seat, so as to selectively adjust the position of the vehicle seat.

Specifically, in step S103, if the vehicle seat is within the predetermined range, the vehicle seat controller also needs to further acquire other states of the vehicle seat to more accurately determine whether the position of the vehicle seat can be adjusted. Moreover, in step S103, if the vehicle seat has exceeded the predetermined range, step S111 is executed, that is, the vehicle seat is maintained at the current position. It can be understood that when the vehicle seat exceeds the predetermined range, the safety system of the vehicle cannot protect the passenger in the vehicle seat; therefore, step S111 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat is already at the boundary of the protection range, so as to further improve the user experience.

Further, in step S103, if the vehicle seat is within the predetermined range, step S104 is executed, that is, the acceleration of the vehicle seat is acquired. It can be understood that when the vehicle is in a situation of rapid acceleration or rapid deceleration, the vehicle seat is likely to get out of control during the adjustment process and cause harm to the passenger. In this case, adjusting the position of the vehicle seat is a very dangerous operation. Therefore, in step S105, the vehicle seat controller needs to determine whether the acceleration of the vehicle seat has exceeded the predetermined acceleration according to the acceleration of the vehicle seat before selectively adjusting the position of the vehicle seat, so as to effectively guarantee the safety of the passenger.

Specifically, in step S105, if the acceleration of the vehicle seat is less than or equal to the predetermined acceleration, the vehicle seat controller also needs to further acquire other states of the vehicle seat to more accurately determine whether the position of the vehicle seat can be adjusted. Moreover, in step S105, if the acceleration of the vehicle seat is greater than the predetermined acceleration, step S111 is executed, that is, the vehicle seat is maintained at the current position. It can be understood that when the acceleration of the vehicle seat is greater than the predetermined acceleration, the vehicle seat is likely to get out of control during the adjustment process, thereby causing harm to the passenger. At this time, step S 111 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the acceleration of the vehicle has exceeded the predetermined acceleration, so as to further improve the user experience.

Further, in step S105, if the acceleration of the vehicle seat is less than or equal to the predetermined acceleration, step S106 is executed, that is, the inclination angle of the vehicle seat is acquired. It can be understood that when the vehicle is on an uphill or downhill slope, especially when the slope gradient thereof is large, the vehicle seat is likely to get out of control during the adjustment process and cause harm to the passenger. Therefore, in this case, adjusting the position of the vehicle seat is a very dangerous operation. In other words, in step S107, the vehicle seat controller must first determine whether the inclination angle of the vehicle seat has exceeded the predetermined angle before selectively adjusting the position of the vehicle seat, so as to effectively guarantee the safety of the passenger.

Specifically, in step S107, if the inclination angle of the vehicle seat is less than or equal to the predetermined angle, the vehicle seat controller also needs to further acquire the speed of the vehicle seat, such that the vehicle seat controller can also more accurately determine whether the position of the vehicle seat can be adjusted according to the speed of the vehicle seat. Moreover, in step S107, if the inclination angle of the vehicle seat is greater than the predetermined angle, step S111 is executed, that is, the vehicle seat is maintained at the current position. It can be understood that, when the inclination angle of the vehicle seat is greater than the predetermined angle, it means that the vehicle is going up or down a steep slope. In this case, the adjustment of the vehicle seat is likely to cause the vehicle seat to get out of control during the adjustment process, thereby causing harm to the passenger. Therefore, step S111 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the vehicle is going up or down a steep slope, so as to further improve the user experience.

Further, in step S107, if the inclination angle of the vehicle seat is less than or equal to the predetermined angle, step S108 is executed, that is, the speed of the vehicle seat is acquired. It can be understood that when the vehicle is running at a high speed, the vehicle seat is likely to get out of control as the running state of the vehicle changes during the adjustment process, thereby posing a serious threat to the life safety of the passenger. Therefore, in this case, adjusting the position of the vehicle seat is also a very dangerous operation. Therefore, in step S109, the vehicle seat controller needs to determine whether the speed of the vehicle seat has exceeded the predetermined speed according to the speed of the vehicle seat before selectively adjusting the position of the vehicle seat, so as to effectively guarantee the safety of the passenger.

Specifically, in step S109, if the speed of the vehicle seat is less than or equal to the predetermined speed, it means that all the states of the vehicle seat have met the safety adjustment requirements. In this case, adjusting the position of the vehicle seat does not pose any threat to the life safety of the passenger in the vehicle seat, that is, it is safe to adjust the position of the vehicle seat at this time. Therefore, step S110 is executed, that is, the vehicle seat controller can adjust the position of the vehicle seat according to the operation instruction from the user, so as to maximize the convenience for the user to adjust the vehicle seat under the premise of effectively guaranteeing the safety of the passenger, so that the passenger himself/herself can allocate the space in the vehicle according to actual use requirements. However, in step S109, if the speed of the vehicle seat is greater than the predetermined speed, step S111 is executed, that is, the vehicle seat is maintained at the current position. It can be understood that when the speed of the vehicle seat is greater than the predetermined speed, the vehicle seat is likely to get out of control as the running state of the vehicle changes during the adjustment process, thereby causing harm to the passenger. At this time, step S111 is executed, that is, the vehicle seat controller controls the vehicle seat to maintain same at the current position in order to effectively guarantee the safety of the passenger. Preferably, the vehicle seat controller can also issue a warning to the passenger through the control terminal, and feeds back to the passenger that the vehicle seat cannot be adjusted because the vehicle has overspeeded, so as to further improve the user experience.

It can be understood by those skilled in the art that although in the fifth preferred embodiment of the control method of the invention, the vehicle seat controller can sequentially acquire the current position, the acceleration, the inclination degree and the speed of the vehicle seat, the technician can obviously acquire only some of the states according to actual requirements. Moreover, the order in which the vehicle seat controller acquires these states can also be adjusted according to actual use requirements. These changes do not go beyond the basic principles of the invention and fall within the scope of protection of the invention.

In addition, the invention further sets forth a computer device, comprising a storage medium and a processor, wherein the storage medium stores a control method according to the above preferred embodiments, and the processor is used to read and execute the control method according to the above preferred embodiments stored in the storage medium.

Finally, it should be noted that the above embodiments are all preferred embodiments of the invention and are not intended to limit the scope of protection of the invention. When those skilled in the art actually uses the invention, some of the steps may be added or deleted as appropriate, or the orders in which different steps are performed may be changed. This change does not go beyond the basic principles of the invention and falls within the scope of protection of the invention.

Heretofore, the preferred embodiments of the invention have been described with reference to the accompanying drawings; however, those skilled in the art can readily understand that the scope of protection of the invention is obviously not limited to these particular embodiments. Without departing from the principle of the invention, a person skilled in the art may make equivalent changes or substitutions on related technical features, and the technical solutions after these changes or substitutions fall into the scope of protection of the invention as defined by the claims.

## Claims

1. A method for controlling a vehicle seat, comprising the following steps:
acquiring an operation instruction for adjusting the vehicle seat (S11, S101); and
acquiring a current position of the vehicle seat (S12, S102);
determining whether the current position of the vehicle seat is within a predetermined range (S13, S103); and
maintaining the vehicle seat at the current position when the current position of the vehicle seat exceeds the predetermined range (S15, S111),
**characterized in that** the method also comprises:
when the current position of the vehicle seat is within the predetermined range, acquiring an acceleration of the vehicle seat (S104); and
when the acceleration of the vehicle seat is greater than a predetermined acceleration, maintain the vehicle seat at the current position (S111).

2. The method for controlling a vehicle seat according to claim 1, **characterized in that** the method also comprises:
when the acceleration of the vehicle seat is within the predetermined acceleration, acquiring an inclination angle of the vehicle seat (S106); and
when the inclination angle of the vehicle seat is greater than a predetermined angle, maintain the vehicle seat at the current position (S111).

3. The method for controlling a vehicle seat according to claim 2, **characterized in that** the method also comprises:
when the inclination angle of the vehicle seat is within the predetermined angle, acquiring a speed of the vehicle seat (S108); and
when the speed of the vehicle seat is greater than a predetermined speed, maintain the vehicle seat at the current position (S111).

4. The method for controlling a vehicle seat according to claim 3, **characterized in that** when the speed of the vehicle seat is within the predetermined speed, adjust the position of the vehicle seat according to the operation instruction.

5. The method for controlling a vehicle seat according to claim 1, **characterized in that** the step of acquiring the acceleration of the vehicle seat (S104) specifically comprises: acquiring an acceleration of the vehicle and using the acceleration of the vehicle as the acceleration of the vehicle seat.

6. The method for controlling a vehicle seat according to claim 3, **characterized in that** the step of acquiring the speed of the vehicle seat (S108) specifically comprises: acquiring a speed of the vehicle and using the speed of the vehicle as the speed of the vehicle seat.

7. A vehicle seat controller, **characterized in that** the vehicle seat controller is able to carry out a method for controlling a vehicle seat according to any one of claims 1 to 6.

## Patentansprüche

1. Verfahren zum Steuern eines Fahrzeugsitzes, mit den folgenden Schritten:
Erfassen einer Betriebsanweisung zum Einstellen des Fahrzeugsitzes (S11, S101) und
Erfassen einer aktuellen Position des Fahrzeugsitzes (S12, S102);
Bestimmen, ob die aktuelle Position des Fahrzeugsitzes innerhalb eines vorbestimmten Bereichs liegt (S13, S103);
und
Beibehalten des Fahrzeugsitzes an der aktuellen Position, wenn die aktuelle Position des Fahrzeugsitzes den vorbestimmten Bereich überschreitet (S15, S111),
**dadurch gekennzeichnet, dass** das Verfahren auch umfasst: wenn die aktuelle Position des Fahrzeugsitzes innerhalb des vorbestimmten Bereichs liegt, Erfassen einer Beschleunigung des Fahrzeugsitzes (S104); und
wenn die Beschleunigung des Fahrzeugsitzes größer als eine vorbestimmte Beschleunigung ist, Beibehalten des Fahrzeugsitzes an der aktuellen Position (S111).

2. Verfahren zum Steuern eines Fahrzeugsitzes nach Anspruch 1,
**dadurch gekennzeichnet, dass** das Verfahren auch umfasst: wenn die Beschleunigung des Fahrzeugsitzes innerhalb der vorbestimmten Beschleunigung liegt, Erfassen eines Neigungswinkels des Fahrzeugsitzes (S106); und
wenn der Neigungswinkel des Fahrzeugsitzes größer als ein vorbestimmter Winkel ist, Beibehalten des Fahrzeugsitzes an der aktuellen Position (S111).

3. Verfahren zum Steuern eines Fahrzeugsitzes nach Anspruch 2, **dadurch gekennzeichnet, dass** das Verfahren auch umfasst:
wenn der Neigungswinkel des Fahrzeugsitzes innerhalb des vorbestimmten Winkels liegt, Erfassen einer Geschwindigkeit des Fahrzeugsitzes (S108); und
wenn die Geschwindigkeit des Fahrzeugsitzes größer als eine vorbestimmte Geschwindigkeit ist, Beibehalten des Fahrzeugsitzes an der aktuellen Position (S111).

4. Verfahren zum Steuern eines Fahrzeugsitzes nach Anspruch 3, **dadurch gekennzeichnet, dass**, wenn die Geschwindigkeit des Fahrzeugsitzes innerhalb der vorbestimmten Geschwindigkeit liegt, Anpassen der Position des Fahrzeugsitzes gemäß der Betriebsanweisung.

5. Verfahren zum Steuern eines Fahrzeugsitzes nach Anspruch 1, **dadurch gekennzeichnet, dass** der Schritt des Erfassens der Beschleunigung des Fahrzeugsitzes (S104) insbesondere umfasst: Erfassen einer Beschleunigung des Fahrzeugs und Verwenden der Beschleunigung des Fahrzeugs als die Beschleunigung des Fahrzeugsitzes.

6. Verfahren zum Steuern eines Fahrzeugsitzes nach Anspruch 3, **dadurch gekennzeichnet, dass** der Schritt des Erfassens der Geschwindigkeit des Fahrzeugsitzes (S108) insbesondere umfasst: Erfassen einer Geschwindigkeit des Fahrzeugs und Verwenden der Geschwindigkeit des Fahrzeugs als die Geschwindigkeit des Fahrzeugsitzes.

7. Fahrzeugsitzcontroller, **dadurch gekennzeichnet, dass** der Fahrzeugsitzcontroller in der Lage ist zum Ausführen eines Verfahrens zum Steuern eines Fahrzeugsitzes nach einem der Ansprüche 1 bis 6.

## Revendications

1. Procédé pour commander un siège de véhicule, comprenant les étapes suivantes :
l'acquisition d'une instruction d'opération pour régler le siège de véhicule (S11, S101) ; et
l'acquisition d'une position actuelle du siège de véhicule (S12, S102) ;
la détermination de si la position actuelle du siège de véhicule est située ou pas dans les limites d'une plage prédéterminée (S13, S103) ; et
le maintien du siège de véhicule dans la position actuelle lorsque la position actuelle du siège de véhicule dépasse la plage prédéterminée (S15, S111),
**caractérisé en ce que** ce procédé comprend en outre :
lorsque la position actuelle du siège de véhicule est située dans les limites d'une plage prédéterminée, l'acquisition d'une accélération du siège de véhicule (S104) ; et
lorsque l'accélération du siège de véhicule est plus grande qu'une accélération prédéterminée, le maintien du siège de véhicule dans la position actuelle (S111).

2. Procédé pour commander un siège de véhicule selon la revendication 1, **caractérisé en ce que** ce procédé comprend en outre :
lorsque l'accélération du siège de véhicule est située dans les limites de l'accélération prédéterminée, l'acquisition d'un angle d'inclinaison du siège de véhicule (S106) ; et
lorsque l'angle d'inclinaison du siège de véhicule est plus grande qu'un angle prédéterminé, le maintien du siège de véhicule dans la position actuelle (S111).

3. Procédé pour commander un siège de véhicule selon la revendication 2, **caractérisé en ce que** ce procédé comprend en outre :
lorsque l'angle d'inclinaison du siège de véhicule est situé dans les limites de l'angle prédéterminé, l'acquisition d'une vitesse du siège de véhicule (S108) ;
et
lorsque la vitesse du siège de véhicule est plus grande qu'une vitesse prédéterminée, le maintien du siège de véhicule dans la position actuelle (S111).

4. Procédé pour commander un siège de véhicule selon la revendication 3, **caractérisé en ce que**, lorsque la vitesse du siège de véhicule est dans les limites de la vitesse prédéterminée, ce procédé règle la position du siège de véhicule conformément à l'instruction d'opération.

5. Procédé pour commander un siège de véhicule selon la revendication 1, **caractérisé en ce que** l'étape d'acquisition de l'accélération du siège de véhicule (S104) comprend spécifiquement : l'acquisition d'une accélération du siège de véhicule et l'utilisation de cette accélération du véhicule comme l'accélération du siège de véhicule.

6. Procédé pour commander un siège de véhicule selon la revendication 3, **caractérisé en ce que** l'étape d'acquisition de la vitesse du siège de véhicule (S108) comprend spécifiquement : l'acquisition d'une vitesse du véhicule et l'utilisation de cette vitesse du véhicule comme la vitesse du siège de véhicule.

7. Dispositif de commande de siège de véhicule, **caractérisé en ce que** ce dispositif de commande de siège de véhicule est capable d'exécuter un procédé pour commander un siège de véhicule selon l'une quelconque des revendications 1 à 6.
